# EUROPEAN PATENT APPLICATION

(11) **EP 4 406 672 A1**
(43) Date of publication of application: **31.07.2024**
(21) Application number: 22903978.9
(22) Date of filing: 15.11.2022
(51) Int. Cl.: B21B 45/02, B21B 38/00, B21C 51/00, B23D 36/00, B24B 27/033, B24B 49/10, C21D 1/00, G01N 27/80

(54) **STEEL PLATE MANUFACTURING METHOD AND STEEL PLATE MANUFACTURING EQUIPMENT LINE**

(30) Priority: 09.12.2021 JP 2021199716
(71) Applicant: JFE Steel Corporation, Tokyo 100-0011 (JP)
(72) Inventor: IMANAKA, Hiroki, Tokyo 100-0011 (JP); MATSUI, Yutaka, Tokyo 100-0011 (JP); TERADA, Kazuki, Tokyo 100-0011 (JP); SHIMAMURA, Junji, Tokyo 100-0011 (JP); IZUMI, Daichi, Tokyo 100-0011 (JP); ADACHI, Kenji, Tokyo 100-0011 (JP); TAMURA, Yuta, Tokyo 100-0011 (JP)
(74) Representative: Haseltine Lake Kempner LLP
(86) International application number: PCT/JP2022/042383
(87) International publication number: WO 2023/106047

(57) **Abstract**

A method for manufacturing a steel plate according to the present invention includes: a temperature measurement step of measuring a surface temperature in an entire width and an entire length of at least one of an upper surface and a lower surface of a steel plate; an accelerated cooling step of cooling the steel plate while conveying the steel plate; a cutting step of cutting the steel plate into a number of plates such that the number of plates corresponds to a measurement result of the surface temperature measured in the temperature measurement step; and a surface layer hardness measurement step of measuring surface layer hardness in the entire width and the entire length of at least one of the upper surface and the lower surface of the steel plate.

## Description

### Field

The present invention relates to a method for manufacturing a steel plate and a facility line for manufacturing a steel plate.

### Background

Conventionally, with increasing energy demand, the construction of pipelines for transporting natural gas and oil is increasing. A UOE steel pipe (or press bend steel pipe) is known as one type of steel pipe used for pipelines. When manufacturing a UOE steel pipe or a press bend steel pipe, first, a continuously cast steel piece is roughly rolled, and then finish rolling is performed in order to obtain a predetermined plate thickness and internal quality. Next, as heat treatment for obtaining various mechanical properties, quenching, annealing, and the like are performed as necessary. Then, a steel plate obtained through such a process is curved in a plate width direction to be tubular, and a butted portion is welded in a long axis direction of the steel plate, thereby manufacturing a steel pipe. The surface layer hardness on an inner surface of the steel pipe applied to a pipeline causes corrosion cracking, and thus is defined in a specification at the time of manufacturing a steel pipe, and conventionally, quality assurance of the surface layer hardness on the inner surface of the steel pipe has been performed by sampling inspection. In addition, Patent Literature 1 discloses a technique of measuring the surface layer hardness on an outer surface of a steel pipe using a sensor that detects an electromagnetic characteristic value such as an eddy current.

### Citation List

### Patent Literature

Patent Literature 1: Japanese Patent No. 4998821 Non Patent Literature
Non Patent Literature 1: Development of an Eddy Current based Inspection Technique for the Detection of Hard Spots on Heavy Plates, WCNDT 2016 (Th1-h1-1)
Non Patent Literature 2: ELECTROMAGNETEC NONDESTRUCTIVE EVALUATION (XI), p.21-p.25

### Summary

### Technical Problem

However, in the quality assurance of the surface layer hardness on an inner surface of a steel pipe by the conventional sampling inspection, the surface layer hardness on an entire inner surface of the steel pipe cannot be guaranteed, and after the steel pipe is applied to a pipeline, a hardened portion (hard spot) having a partially hard surface layer hardness exists in the inner surface of the steel pipe, and therefore corrosion cracking occurs due to the hardened portion.

In addition, it is conceivable to measure the surface layer hardness on an entire inner surface of a steel pipe by using a sensor that detects an electromagnetic characteristic value as in the technology disclosed in Patent Literature 1. However, a complicated mechanism is required to scan an entire surface on an inner surface side of a steel pipe using the sensor, which is not practical. Specifically, for example, it is necessary to arrange a plurality of sensors on an inner surface side of a steel pipe and adjust the arrangement of the plurality of sensors according to the size of the steel pipe, or it is necessary to rotate the plurality of sensors or the steel pipe in order to scan the entire surface on the inner surface side of the steel pipe. Therefore, the work of measuring the surface layer hardness becomes complicated, and there is a concern that productivity of a steel pipe is deteriorated.

Examples of the cause of the occurrence of the hardened portion include a two-phase structure of ferrite and bainite in a surface layer portion. This is because when an accelerated cooling start temperature of a steel plate falls below the Ar3 point during the steel plate manufacturing, polygonal ferrite is generated in a surface layer portion when accelerated cooling is performed, and carbon discharged in a ferrite generation process is concentrated in an untransformed austenite region, so that lath-bainite is prone to be formed, and as a result, the hardness of bainite increases. In the technique of measuring electromagnetic characteristic values by eddy current measurement to determine the hardness as disclosed in Patent Literature 1, it is difficult to accurately evaluate the hardness in a structure in which ferrite and bainite are mixed, and there is a problem that over-detection or non-detection of a hardened portion is caused. In a case where there are many over-detections in a hardness evaluation, productivity decreases. In addition, in a case where there is non-detection, there is a possibility of corrosion causing a leakage accident after a line pipe is laid.

The present invention has been made in view of the above problems, and an object thereof is to provide a method for manufacturing a steel plate and a facility line for manufacturing a steel plate which are capable of manufacturing a steel plate with specified surface layer hardness.

### Solution to Problem

To solve the above-described problem and achieve the object, a method for manufacturing a steel plate according to the present invention includes: a temperature measurement step of measuring a surface temperature in an entire width and an entire length of at least one of an upper surface and a lower surface of a steel plate; an accelerated cooling step of cooling the steel plate while conveying the steel plate; a cutting step of cutting the steel plate into a number of plates such that the number of plates corresponds to a measurement result of the surface temperature measured in the temperature measurement step; and a surface layer hardness measurement step of measuring surface layer hardness in the entire width and the entire length of at least one of the upper surface and the lower surface of the steel plate.

Moreover, the above-described method for manufacturing a steel plate according to the present invention includes a hardened portion removing step of removing a hardened portion, which is harder than hardness set in advance, in a surface layer of the steel plate based on a measurement result of the surface layer hardness measured in the surface layer hardness measurement step.

Moreover, in the above-described method for manufacturing a steel plate according to the present invention, in the temperature measurement step, a temperature distribution of the surface temperature is divided into N evaluation ranges set in advance in a longitudinal direction of the steel plate, and an evaluation index of temperature is calculated for each of the divided evaluation ranges.

Moreover, in the above-described method for manufacturing a steel plate according to the present invention, in the cutting step, the steel plate is cut into an initially set number of plates in a case where all the evaluation ranges are determined to be passed, based on the evaluation index for each of the evaluation ranges.

Moreover, in the above-described method for manufacturing a steel plate according to the present invention, in the cutting step, in a case where it is determined, based on the evaluation index for each of the evaluation ranges, that there is a failure in even one place in the N-divided evaluation ranges, a number of plates that can be acquired from the steel plate is calculated, and in a case where it is determined that one or more plates can be acquired from the steel plate, the steel plate is cut based on the calculated number of plates and the passed evaluation range.

Moreover, in the above-described method for manufacturing a steel plate according to the present invention, in the cutting step, in a case where it is determined, based on the evaluation index for each of the evaluation ranges, that there is a failure in even one place in the N-divided evaluation ranges, a number of plates that can be acquired from the steel plate is calculated, and in a case where it is determined that not even one plate can be acquired from the steel plate, the steel plate is not cut.

Moreover, in the above-described method for manufacturing a steel plate according to the present invention, the surface layer hardness measurement step includes a first surface layer hardness measurement step of measuring the surface layer hardness by utilizing a fact that an electromagnetic feature quantity of a surface layer of the steel plate changes according to the surface layer hardness, and a second surface layer hardness measurement step of measuring the surface layer hardness of a portion of the steel plate from which a hardened portion has been removed in the hardened portion removing step, by utilizing a fact that an electromagnetic feature quantity of a surface layer of the steel plate changes according to the surface layer hardness or by using a Leeb hardness evaluation method.

Moreover, a facility line for manufacturing a steel plate according to the present invention includes: a temperature measurement facility configured to measure a surface temperature in an entire width and an entire length of at least one of an upper surface and a lower surface of a steel plate; an accelerated cooling facility configured to cool the steel plate while conveying the steel plate after heating the steel plate; a cutting facility configured to cut into a number of plates such that the number of plates corresponds to a measurement result of the surface temperature measured with the temperature measurement facility; and a surface layer hardness measurement facility configured to measure surface layer hardness in the entire width and the entire length of at least one of the upper surface and the lower surface of the steel plate.

Moreover, the above-described facility line for manufacturing a steel plate according to the present invention includes a hardened portion removing facility configured to remove a hardened portion, which is harder than hardness set in advance, in a surface layer of the steel plate based on a measurement result of the surface layer hardness measured with the surface layer hardness measurement facility.

### Advantageous Effects of Invention

A method for manufacturing a steel plate and a facility line for manufacturing a steel plate according to the present invention have an effect that a steel plate with specified surface layer hardness can be manufactured. Brief Description of Drawings
FIG. 1 is a diagram illustrating each processing step of manufacturing a steel plate from a steel piece to which a method for manufacturing a steel plate according to an embodiment is applied.
FIG. 2 is a diagram illustrating an example of a facility line for manufacturing a steel plate according to an embodiment.
FIG. 3 is a diagram illustrating an example of a temperature measurement facility used in a temperature measurement step.
FIG. 4 is a diagram illustrating N-divided evaluation ranges in a longitudinal direction of a steel plate.
FIG. 5 is a flowchart illustrating an example of control performed in a temperature measurement step.
FIG. 6 is a flowchart illustrating an example of control performed in a cutting step.
FIG. 7 is a diagram illustrating an example of an automatic surface layer hardness measurement device provided in a first hardness measurement facility used in a first surface layer hardness measurement step.
FIG. 8 is a diagram illustrating an example of an arrangement state of hardness sensors in an upper-surface-measuring sensor head and a lower-surface-measuring sensor head.
FIG. 9 is a diagram illustrating a calibration steel plate provided with a sensitivity calibration site and an artificial hardened portion.
FIG. 10 is a flowchart illustrating an example of control performed in a first surface layer hardness measurement step, a hardened portion removing step, and a second surface layer hardness measurement step. Description of Embodiments

Hereinafter, an embodiment of a method for manufacturing a steel plate and a facility line for manufacturing a steel plate according to the present invention will be described. Note that the present invention is not limited by the present embodiment.

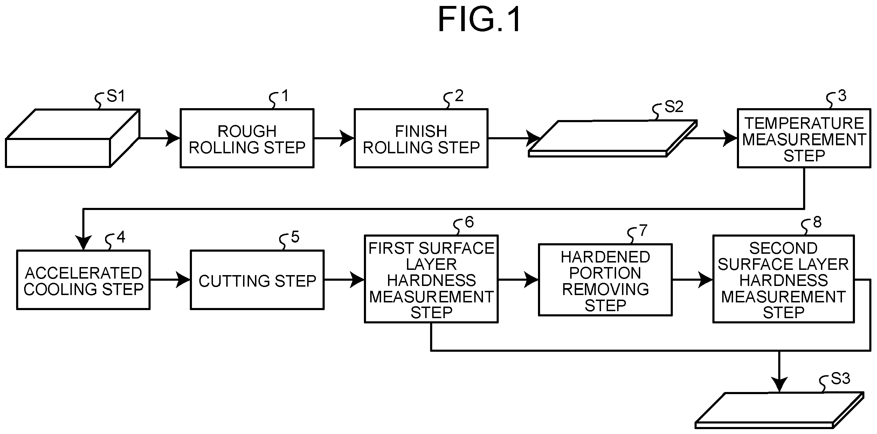

FIG. 1 is a diagram illustrating each processing step of manufacturing a steel plate from a steel piece to which a method for manufacturing a steel plate according to an embodiment is applied. As illustrated in FIG. 1, the method for manufacturing a steel plate according to an embodiment includes: a rough rolling step 1 and a finish rolling step 2, which are rolling steps of rolling a steel piece S1 manufactured by a continuous casting machine to obtain a steel plate S2; a temperature measurement step 3 of measuring a surface temperature in an entire width and an entire length of at least one of an upper surface and a lower surface of the steel plate S2 before cooling the steel plate S2 is performed; an accelerated cooling step 4 of performing accelerated cooling on the steel plate S2; a cutting step 5 of cutting the steel plate S2 into a number of plates such that the number of plates corresponds to a measurement result of the surface temperature measured in the temperature measurement step 3; a first surface layer hardness measurement step 6 of measuring surface layer hardness of the steel plate S2 from an electromagnetic characteristic value; a hardened portion removing step 7 of removing a hardened portion in the steel plate S2 in a case where the hardened portion (hard spot) exists on the steel plate S2 in the first surface layer hardness measurement step 6; and a second surface layer hardness measurement step 8 of measuring surface layer hardness of a portion of the steel plate S2 from which the hardened portion has been removed.

In the first surface layer hardness measurement step 6 and the second surface layer hardness measurement step 8, the surface layer hardness of the steel plate S2 is measured from an electromagnetic characteristic value, measured by a hardness meter using a rebound type probe, or measured by a hardness meter using an indentation type probe. Examples of a measurement method using a hardness meter using a rebound type probe include a Leeb hardness evaluation method. Examples of a measurement method using a hardness meter using an indentation type include a Rockwell hardness test. In addition, in the method for manufacturing a steel plate according to an embodiment, the cutting step 5 may be performed after the first surface layer hardness measurement step 6, the hardened portion removing step 7, the second surface layer hardness measurement step 8, and the like.

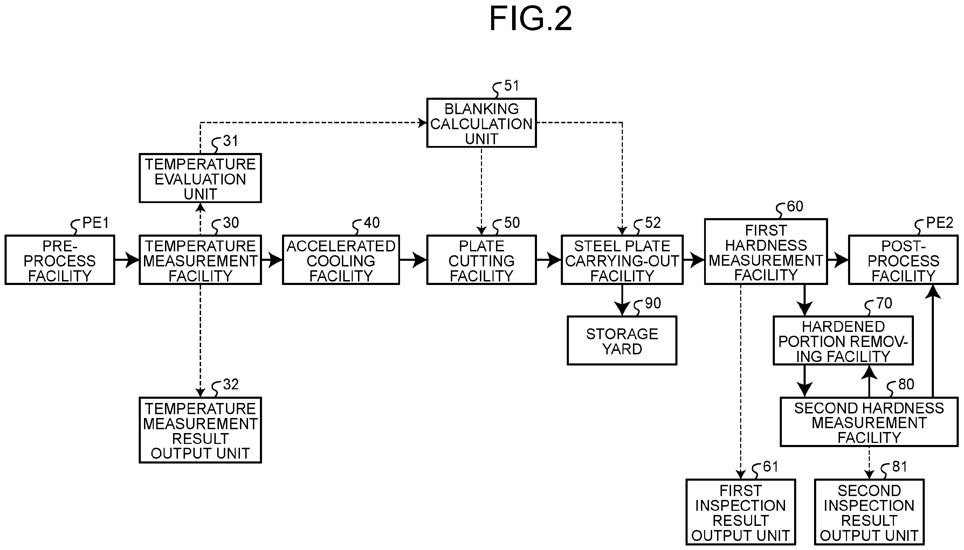

FIG. 2 is a diagram illustrating an example of a facility line for manufacturing a steel plate according to an embodiment. In FIG. 2, solid arrows indicate flows of steel plates S2 and S3 between respective facilities. In addition, in FIG. 2, broken line arrows indicate flows of information between respective facilities, respective unit, and the like.

The facility line for manufacturing a steel plate according to an embodiment includes a pre-process facility PE1 such as rolling facility used in the rolling step (the rough rolling process 1 and the finish rolling process 2), a temperature measurement facility 30 used in the temperature measurement step 3, an accelerated cooling facility 40 used in the accelerated cooling step 4, a plate cutting facility 50 and a steel plate carrying-out facility 52 which are used in the cutting step 5, a first hardness measurement facility 60 used in the first surface layer hardness measurement step 6, a hardened portion removing facility 70 used in the hardened portion removing step 7, and a second hardness measurement facility 80 used in the second surface layer hardness measurement step 8.

The first hardness measurement facility 60 used in the first surface layer hardness measurement step 6 measures the surface layer hardness of the steel plate S2 using, for example, a fact that the electromagnetic feature quantity of the steel plate surface layer changes according to a change in hardness. In addition, the second hardness measurement facility 80 used in the second surface layer hardness measurement step 8 measures the surface layer hardness of the steel plate S2 using, for example, a fact that the electromagnetic feature quantity of the steel plate surface layer changes according to a change in hardness, or measures the surface layer hardness of the steel plate S2 using a Leeb hardness evaluation method.

In addition, the facility line for manufacturing a steel plate according to an embodiment is provided with a temperature evaluation unit 31 and a temperature measurement result output unit 32 which are used in the temperature measurement step 3, a blanking calculation unit 51 used in the cutting step 5, a first inspection result output unit 61 used in the first surface layer hardness measurement step 6, and a second inspection result output unit 81 used in the second surface layer hardness measurement step 8.

In the facility line for manufacturing a steel plate according to an embodiment, the surface layer hardness of the steel plate S2 is measured by the first hardness measurement facility 60 or the second hardness measurement facility 80, and in a case where the steel plate S2 has no hardened portion and is determined to be suitable, it is determined that manufacturing of the steel plate S3 used for manufacturing a steel pipe is completed, and the steel plate S3 is sent to the post-process facility PE2 used in a post-process (steel pipe manufacturing step or the like). In addition, in the facility line for manufacturing a steel plate according to an embodiment, in a case where cutting the steel plate S2 is not performed in the cutting step 5, the steel plate S2 is carried out to a storage yard 90 by the steel plate carrying-out facility 52.

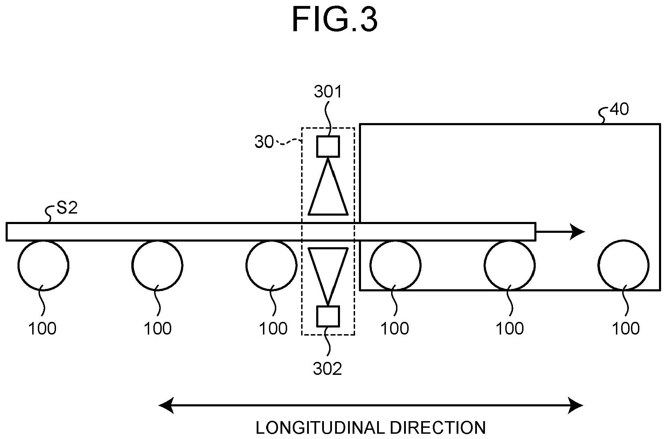

FIG. 3 is a diagram illustrating an example of the temperature measurement facility 30 used in the temperature measurement step 3. The temperature measurement facility 30 includes an upper-surface-measuring radiation thermometer 301 for measuring a temperature of an upper surface of the steel plate S2 sent from the pre-process facility PE1 (see FIG. 2) and a lower-surface-measuring radiation thermometer 302 for measuring a temperature of a lower surface of the steel plate S2. As the upper-surface-measuring radiation thermometer 301 and the lower-surface-measuring radiation thermometer 302, for example, a scanning type radiation thermometer can be used. In the temperature measurement facility 30, the upper-surface-measuring radiation thermometer 301 and the lower-surface-measuring radiation thermometer 302 are installed on an entrance side of the accelerated cooling facility 40 used for cooling the steel plate S2 in the accelerated cooling step 4, at positions facing the upper surface and the lower surface of the steel plate S2, respectively. As a result, the temperature measurement facility 30 can measure the temperature of the entire length L and the entire width W of the upper surface and the lower surface of the steel plate S2 conveyed toward the accelerated cooling facility 40 by a conveyance table roll 100.

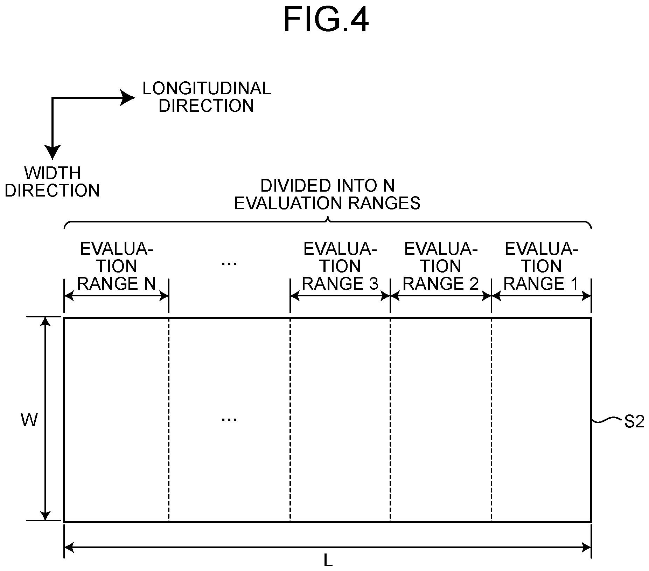

FIG. 4 is a diagram illustrating N-divided evaluation ranges in a longitudinal direction of the steel plate S2. In the temperature measurement step 3, the temperature evaluation unit 31 divides the temperature distribution of each of the upper surface and the lower surface of the steel plate S measured by the temperature measurement facility 30 into N evaluation ranges (in FIG. 4, evaluation range 1, evaluation range 2, evaluation range 3,..., and evaluation range N) set in advance in the longitudinal direction of the steel plate S2 as illustrated in FIG. 4, and calculates, for example, an average value, a maximum value, a minimum value, and a standard deviation of the temperature, as evaluation indices for each of the divided evaluation ranges. As the evaluation index, at least one of an average value, a maximum value, a minimum value, and a standard deviation of the temperature may be calculated.

In addition, in the temperature measurement step 3, the temperature measurement result output unit 32 illustrated in FIG. 2 displays the temperatures of the upper surface and the lower surface of the steel plate S2 measured by the temperature measurement facility 30, or outputs information on the temperature to another output unit.

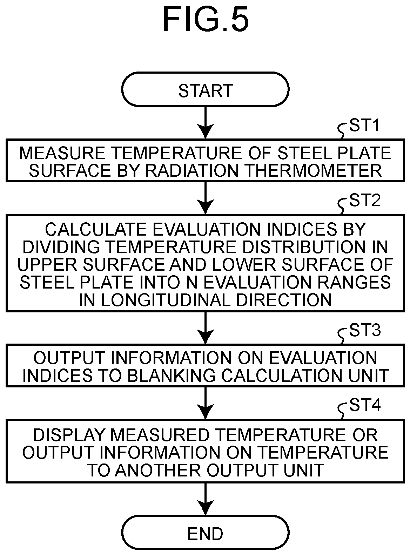

FIG. 5 is a flowchart illustrating an example of control performed in the temperature measurement step 3.

First, in the temperature measurement step 3, the upper-surface-measuring radiation thermometer 301 and the lower-surface-measuring radiation thermometer 302 measure the respective surface temperatures of the upper surface and the lower surface of the steel plate S2 (Step ST1). Next, in the temperature measurement step 3, the temperature evaluation unit 31 divides the temperature distribution in each of the upper surface and the lower surface of the steel plate S2 measured into N evaluation ranges set in advance in the longitudinal direction of the steel plate S2 as illustrated in FIG. 4, and calculates an average value, a maximum value, a minimum value, and a standard deviation of the temperature, as evaluation indices for each of the divided evaluation ranges (Step ST2). Next, in the temperature measurement step 3, information on the evaluation indices (an average value, a maximum value, a minimum value, and a standard deviation of the temperature) calculated by the temperature evaluation unit 31 is output to the blanking calculation unit 51 used in the cutting step 5 (Step ST3). Next, in the temperature measurement step 3, the temperature measurement result output unit 32 displays the measured temperature or outputs information on the temperature to another output unit (Step ST4). Thereafter, in the temperature measurement step 3, a series of control ends.

In the temperature measurement step 3, the control in which the temperature measurement result output unit 32 displays the measured temperature or outputs the information on the temperature to another output unit may be performed at a timing before or the same timing as the control in which the evaluation index is calculated by the temperature evaluation unit 31 after the surface temperature of each of the upper surface and the lower surface of the steel plate S2 is measured.

The accelerated cooling step 4 is a step of cooling a high-temperature steel plate immediately after hot rolling or a steel plate reheated to a high temperature by, for example, an accelerated cooling facility which is pass-through water cooling facility. In the present invention, the accelerated cooling step 4 is not particularly limited, and various known methods can be applied.

Next, the cutting step 5 will be described. In the cutting step 5, from the temperature distribution of the surface temperature of the steel plate S2 measured in the temperature measurement step 3 before the acceleration cooling in the accelerated cooling step 4, a portion where a hardened portion (hard spot) is prone to be generated on the surface layer of the steel plate S2 by the acceleration cooling is determined, and the steel plate S2 is cut into a number of plates such that the number of plates corresponds to the measurement result of the surface temperature measured in the temperature measurement step 3 while excluding the portion.

In the cutting step 5, first, based on the average value, the maximum value, the minimum value, and the standard deviation of the temperature calculated as the evaluation indices for each of the N-divided evaluation ranges calculated by the temperature evaluation unit 31 in the temperature measurement step 3, the blanking calculation unit 51 determines whether or not all the N-divided evaluation ranges are passed with respect to a threshold value set in advance. Note that, it is desirable to set the threshold value for each of the N-divided evaluation ranges. In addition, it is desirable to set the threshold value in consideration of a temperature decrease from the temperature measurement in the temperature measurement step 3 to reaching the accelerated cooling facility. In addition, it is desirable to set the threshold value by adding a margin in consideration of the measurement accuracy of the radiation thermometer and the like to the temperature of the Ar3 point determined by components of the steel plate S2. As a determination criterion of the pass or fail (that is, whether or not the evaluation range may be used) of the evaluation range with respect to the threshold value, for example, in a case where the minimum value of the temperature that is the evaluation index is equal to or less than the threshold value, or in a case where a value obtained by subtracting 3σ (σ is a standard deviation) from the average value of the temperature that is the evaluation index is equal to or less than the threshold value, it is determined to be passed.

In a case where it is determined that all the N-divided evaluation ranges are determined to be passed with respect to the threshold value set in advance, the blanking calculation unit 51 outputs, to the plate cutting facility 50, information on the initially set number of plates to be cut from one steel plate S2 by the plate cutting facility 50 in order to cut the steel plate S2.

In addition, in a case where it is determined that there is a failure in even one place in the N-divided evaluation ranges, the blanking calculation unit 51 calculates the number of plates that can be acquired from one steel plate S2, based on the consecutive passed portions in the N-divided evaluation ranges. Then, in a case of determining that one or more plates can be acquired from one steel plate S2, the blanking calculation unit 51 recalculates the cutting position at which the steel plate S2 is cut, based on the calculated number of plates and the passed evaluation range, and outputs information for cutting the steel plate S2 to the plate cutting facility 50.

Then, the plate cutting facility 50 cuts the steel plate S2 that has undergone the accelerated cooling step 4, based on the number of plates cut from one steel plate S2 acquired from the blanking calculation unit 51. Thereafter, the cut steel plate S2 is carried out to the first hardness measurement facility 60 used in the first surface layer hardness measurement step 6 by the steel plate carrying-out facility 52.

In addition, in a case where even one place is determined to be failed in the N-divided evaluation ranges, the blanking calculation unit 51 calculates the number of plates that can be acquired from one steel plate S2, based on the consecutive passed portion in N-divided evaluation ranges, and in a case where it is determined that not even one plate can be acquired from one steel plate S2, the blanking calculation unit outputs, to the steel plate carrying-out facility 52, information for carrying-out the steel plate S2 from the manufacturing line to the storage yard 90 using the steel plate carrying-out facility 52, without cutting the steel plate S2 that has undergone the accelerated cooling step 4 by the plate cutting facility 50. Then, the steel plate carrying-out facility 52 carries out the steel plate S2 determined not to be cut from the manufacturing line to the storage yard 90 storing the steel plate S2.

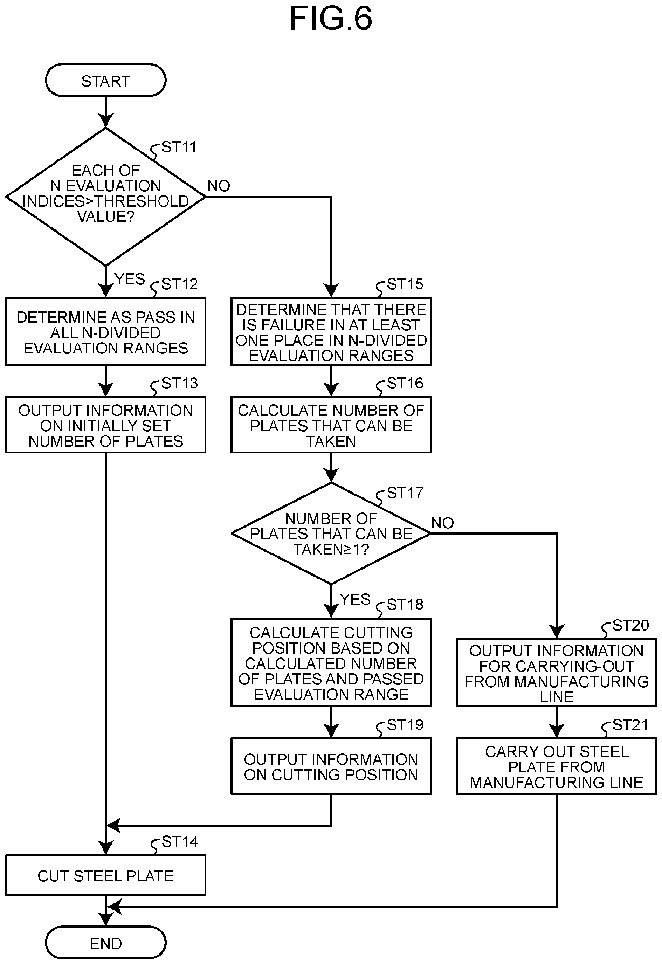

FIG. 6 is a flowchart illustrating an example of control performed in the cutting step 5.

First, in the cutting step 5, the blanking calculation unit 51 determines whether or not the evaluation index is larger than a threshold value set in advance in all the N-divided evaluation ranges (Step ST11). In a case of determining that the evaluation index is larger than the threshold value set in advance in all the N-divided evaluation ranges (Yes in Step ST11), the blanking calculation unit 51 determines to be passed in all the N-divided evaluation ranges (Step ST12). Next, the blanking calculation unit 51 outputs, to the plate cutting facility 50, information on the initially set number of plates to be cut from one steel plate S2 (Step ST13). Next, in the cutting step 5, the plate cutting facility 50 cuts the steel plate S2 into a plurality of plates based on the acquired information on the initially set number of plates (Step ST14). Thereafter, in the cutting step 5, a series of control ends.

On the other hand, in a case of determining that the evaluation indices are not necessarily larger than the threshold value set in advance in all the N-divided evaluation ranges, in other words, in a case of determining that the evaluation index is equal to or smaller than the threshold value set in advance in even one place of the N-divided evaluation ranges (No in Step ST11), the blanking calculation unit 51 determines that there is a failure in at least one place in the N-divided evaluation ranges (Step ST15). Next, the blanking calculation unit 51 calculates the number of plates that can be acquired from one steel plate S2 (the number of plates that can be taken), based on the consecutive passed portions in the N-divided evaluation ranges (Step ST16).

The blanking calculation unit 51 determines whether or not one or more plates can be acquired from one steel plate S2 (Step ST17). In a case of determining that one or more plates can be acquired from one steel plate S2 (Yes in Step ST17), the blanking calculation unit 51 calculates a cutting position at which the steel plate S2 is cut based on the calculated number of plates (the number of plates that can be taken) and the passed evaluation range (Step ST18). Next, the blanking calculation unit 51 outputs information on the calculated cutting position to the plate cutting facility 50 (Step ST19). Next, in the cutting step 5, the plate cutting facility 50 cuts the steel plate S2 into a plurality of plates based on the acquired information on the cutting position (Step ST14). Thereafter, in the cutting step 5, a series of control ends.

In addition, in the process of Step ST17, in a case where it is determined that not even one plate can be acquired from the one steel plate S2 (No in Step ST17), the blanking calculation unit 51 outputs, to the steel plate carrying-out facility 52, information for carrying out the steel plate S2 from the manufacturing line to the storage yard 90 using the steel plate carrying-out facility 52 without cutting the steel plate S2 (Step ST20). Next, in the cutting step 5, the steel plate carrying-out facility 52 carries out the steel plate S2 from the manufacturing line to the storage yard 90 based on the acquired information for carrying out the steel plate S2 from the manufacturing line (Step ST21). Thereafter, in the cutting step 5, a series of control ends.

In the description of the above embodiment, the case where the pass or fail determination or the steel plate cutting is performed by dividing the evaluation range into N evaluation ranges set in advance in the longitudinal direction of the steel plate S2, in the temperature measurement step 3 and the cutting step 5 was described. As another embodiment of the present invention, it is also possible to perform pass or fail determination and steel plate cutting by dividing the evaluation range into M evaluation ranges set in advance in the width direction of the steel plate S2. As still another embodiment of the present invention, it is also possible to perform pass or fail determination and steel plate cutting by dividing the evaluation range into evaluation ranges set in advance in both the longitudinal direction and the width direction of the steel plate S2.

Next, the first surface layer hardness measurement step 6 will be described. The first surface layer hardness measurement step 6 is configured with a step of measuring an electromagnetic characteristic value (change in coercive force or magnetic permeability, or the like) in a range of 0.1 [mm] to 1 [mm] below the surface layer of at least one of the upper surface and the lower surface of the steel plate S2, and measuring the hardness of the surface layer of at least one of the upper surface and the lower surface based on the measured characteristic value, and a step of determining whether or not there is a hardened portion (hard spot) harder than the surface layer hardness set in advance by the measurement.

Here, a known method can be used to measure the hardness of the surface layer from the electromagnetic characteristic value of the surface layer of the steel plate S2. In general, it is known that there is a relationship between the shape of the magnetic hysteresis curve with respect to the surface layer of the steel plate and the hardness of the surface layer of the steel plate, and for example, in the method described in Non Patent Literature 1, the hardness of the surface layer of the steel plate is estimated by measuring the magnetic permeability. In addition, in the method described in Non Patent Literature 2, a feature quantity is extracted from the shape of the magnetic hysteresis curve, and the relationship between the feature quantity and the hardness of the surface layer of the steel plate is machine-learned in advance to estimate the hardness of the surface layer of the steel plate. In the first surface layer hardness measurement step 6 according to the present embodiment, a method is applied in which the electromagnetic characteristic value of the surface layer of the steel plate S2 is measured by eddy current flaw detection method, and the hardness of the surface layer of the steel plate S2 is evaluated from the relationship between the magnetic parameter (coercive force or magnetic permeability, or feature quantity of hysteresis curve) described in Non Patent Literature 1 and Non Patent Literature 2 and the hardness of the surface layer of the steel plate. When the electromagnetic characteristic value of the surface layer of the steel plate S2 is measured by the eddy current flaw detection method, for example, it is desirable to use an eddy current signal whose frequency is set so as to penetrate from the surface layer to a position of 300 [µm] in the depth direction.

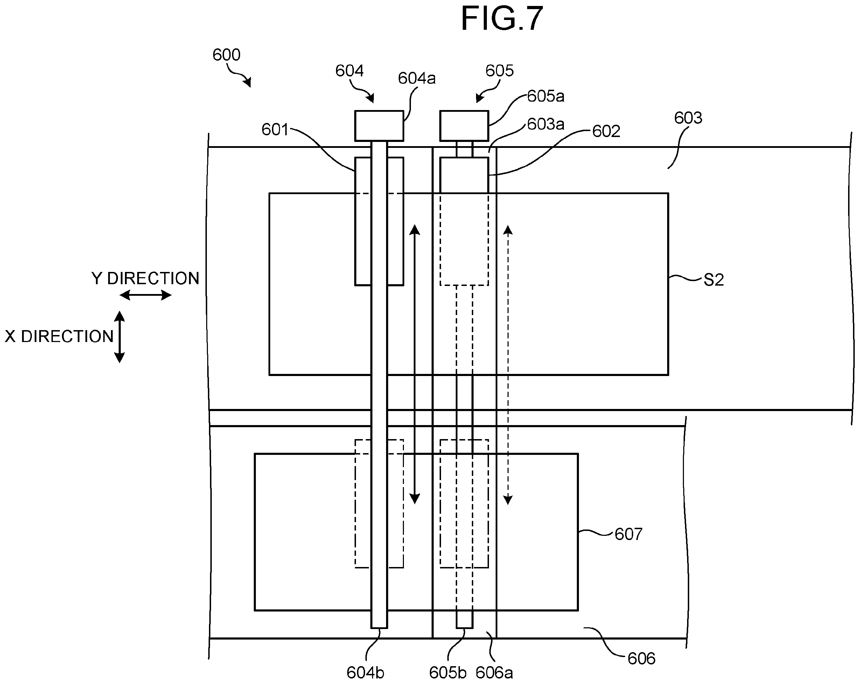

FIG. 7 is a diagram illustrating an example of an automatic surface layer hardness measurement device 600 provided in the first hardness measurement facility 60 used in the first surface layer hardness measurement step 6. In FIG. 7, the Y direction indicates the longitudinal direction of the steel plate S2, and the X direction indicates the width direction of the steel plate S2 orthogonal to the Y direction.

The automatic surface layer hardness measurement device 600 includes an upper-surface-measuring sensor head 601, a lower-surface-measuring sensor head 602, a surface layer hardness measurement area 603, an upper-surface-side movable unit 604, a lower-surface-side movable unit 605, and a calibration steel plate 607.

The upper-surface-measuring sensor head 601 measures the surface layer hardness of the upper surface of the steel plate S2, and the lower-surface-measuring sensor head 602 measures the surface layer hardness of the lower surface of the steel plate S2. In addition, a plurality of hardness sensors 608 are provided by being arranged in an array, on a surface of each of the upper-surface-measuring sensor head 601 and the lower-surface-measuring sensor head 602 on a side facing the steel plate S2, as means for measuring the surface layer hardness. The plurality of hardness sensors 608 are sensors that measure electromagnetic characteristic values of the surface layer of the steel plate S2 by eddy current flaw detection method.

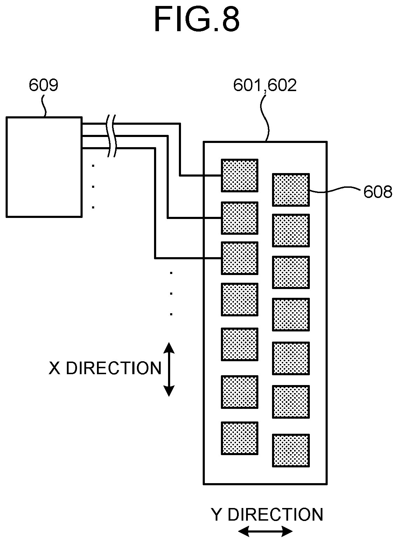

FIG. 8 illustrates an example of an arrangement state of the hardness sensors 608 in the upper-surface-measuring sensor head 601 and the lower-surface-measuring sensor head 602. The upper-surface-measuring sensor head 601 and the lower-surface-measuring sensor head 602 demagnetize the entire surface of the surface layer of the upper surface and the lower surface of the steel plate S2 by the provided hardness sensor 608. In addition, the upper-surface-measuring sensor head 601 and the lower-surface-measuring sensor head 602 magnetize the entire surface of the surface layer of the upper surface and the lower surface of the steel plate S2 by the provided hardness sensor 608, and measure the electromagnetic characteristic value (change in coercive force or magnetic permeability, or the like) of each surface layer.

The plurality of hardness sensors 608 are connected to a hardness sensor control unit 609 for controlling the hardness sensor 608. The hardness sensor control unit 609 controls demagnetization, magnetization, and measurement of electromagnetic characteristic values of the hardness sensor 608. Furthermore, the hardness sensor control unit 609 calculates the hardness of the surface layers of the upper surface and the lower surface, based on the measured electromagnetic characteristic value. In addition, these control and calculation can be performed individually for each hardness sensor 608 or simultaneously for all the hardness sensors 608.

Here, as the hardness sensor 608 and the hardness sensor control unit 609, known devices can be used. For example, the relationship between the electromagnetic characteristic value and the surface layer hardness is set in advance for the surface layer of the steel plate S2, and the hardness of the surface layer of the steel plate S2 can be calculated and measured based on the relationship and the electromagnetic characteristic value of the surface layer measured by the hardness sensor 608.

The upper-surface-side movable unit 604 includes an upper surface side drive motor 604a and an upper-surface-side guide rail 604b elongated in the X direction in FIG. 7, and is configured such that the upper-surface-measuring sensor head 601 is movable in the X direction in FIG. 7 along the upper-surface-side guide rail 604b by the driving force from the upper surface side drive motor 604a. In addition, the lower-surface-side movable unit 605 includes a lower surface side drive motor 605a and a lower-surface-side guide rail 605b elongated in the X direction in FIG. 7, and is configured such that the lower-surface-measuring sensor head 602 is movable in the X direction in FIG. 7 along the lower-surface-side guide rail 605b by the driving force from the lower surface side drive motor 605a.

The automatic surface layer hardness measurement device 600 can measure hardness in the surface layer hardness measurement area 603. Furthermore, in the surface layer hardness measurement area 603, a region larger than the X direction and the Y direction of the steel plate S2 to be measured is set. In the surface layer hardness measurement area 603, the steel plate S2 is movable in the Y direction in FIG. 7 by a conveyance mechanism configured with a plurality of conveyance rollers (not illustrated). An opening 603a is provided in a part of the surface layer hardness measurement area 603. A part or the entirety of the lower-surface-measuring sensor head 602 and the lower-surface-side guide rail 605b are provided in the opening 603a in a state of being embedded. With this installation state, the hardness sensor 608 provided in the lower-surface-measuring sensor head 602 can face the lower surface of the steel plate S2 in a non-contact manner.

Then, by combining the movement of the upper-surface-measuring sensor head 601 in the X direction in FIG. 7 by the upper-surface-side movable unit 604, the movement of the lower-surface-measuring sensor head 602 in the X direction in FIG. 7 by the lower-surface-side movable unit 605, and the movement of the steel plate S2 in the Y direction in FIG. 7, the upper-surface-measuring sensor head 601 and the lower-surface-measuring sensor head 602 can be scanned (XY scanning) in the X direction in FIG. 7 and the Y direction in FIG. 7. As a result, demagnetization of the entire upper surface and the entire lower surface of the steel plate S2 and measurement of surface layer hardness become possible.

In the present embodiment, the lengths of the upper-surface-measuring sensor head 601 and the lower-surface-measuring sensor head 602 in the X direction in FIG. 7 are shorter than the maximum width of the steel plate S2 in the X direction in FIG. 7 and longer than half the maximum width. Then, a plurality of hardness sensors 608 are arranged in an array, on a surface of each of the upper-surface-measuring sensor head 601 and the lower-surface-measuring sensor head 602 on a side facing the steel plate S2, such that the surface layer hardness can be measured with a width that is half the maximum width of the steel plate S2 in the X direction in FIG. 7. Therefore, at the time of measuring the surface layer hardness, the steel plate S2 is divided into halves in the X direction in FIG. 7 in the surface layer hardness measurement area 603, and the surface layer hardness of one side of the upper surface and the lower surface of the steel plate S2 is measured for each side.

On the other hand, as the upper-surface-measuring sensor head 601 and the lower-surface-measuring sensor head 602, those in which a length in the X direction in FIG. 7 is equal to or larger than the maximum width of the steel plate S2 in the X direction in FIG. 7, and a plurality of hardness sensors 608 are arranged on an array so that the surface layer hardness can be measured with the maximum width may be used. In this case, the surface layer hardness of the upper surface and the lower surface of the steel plate S2 is measured by moving the steel plate S2 in the Y direction in FIG. 7 and performing scanning (Y scanning) in the Y direction in FIG. 7 without moving the upper-surface-measuring sensor head 601 and the lower-surface-measuring sensor head 602 in the surface layer hardness measurement area 603.

Here, in order to accurately measure the surface layer hardness by the upper-surface-measuring sensor head 601 and the lower-surface-measuring sensor head 602, it is desirable to correct the variation in sensitivity of each hardness sensor 608. Therefore, in the first surface layer hardness measurement step 6, before performing the measurement of the surface layer hardness of the upper surface and the lower surface of the steel plate S2, the upper-surface-measuring sensor head 601 and the lower-surface-measuring sensor head 602 may be moved into a sensitivity calibration area 606, and the sensitivity calibration of each hardness sensor 608 may be performed using the calibration steel plate 607 having a uniform structure.

The automatic surface layer hardness measurement device 600 can perform sensitivity calibration of the hardness sensor 608 in the sensitivity calibration area 606. Further, in the sensitivity calibration area 606, a region larger than the calibration steel plate 607 in the X direction in FIG. 7 and the Y direction in FIG. 7 is set. In the sensitivity calibration area 606, the calibration steel plate 607 is movable in the Y direction in FIG. 7, by a conveyance mechanism configured with a plurality of conveyance rollers (not illustrated). An opening 606a is provided in a part of the sensitivity calibration area 606. The lower-surface-side guide rail 605b is provided in the opening 606a in a state of being embedded. In a case where the lower-surface-measuring sensor head 602 is positioned in the sensitivity calibration area 606 along the lower-surface-side guide rail 605b, a part of or entirety of the lower-surface-measuring sensor head 602 is disposed in the opening 606a in a state of being embedded. With this installation state, the hardness sensor 608 provided in the lower-surface-measuring sensor head 602 can face the lower surface of the calibration steel plate 607 in a non-contact manner.

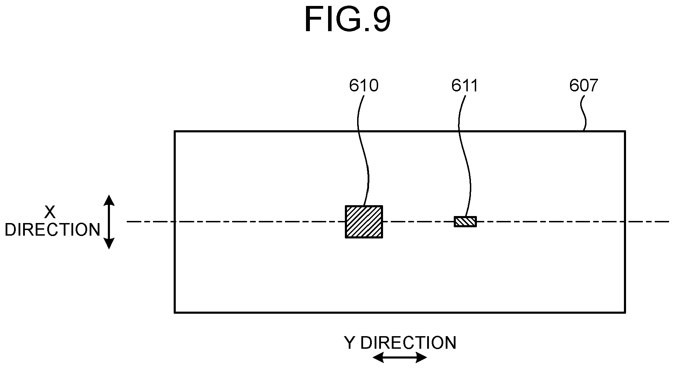

Then, when performing sensitivity calibration of each of the hardness sensors 608, the upper-surface-measuring sensor head 601 and the lower-surface-measuring sensor head 602 can be scanned (XY scanning) in the X direction in FIG. 7 and the Y direction in FIG. 7, by combining the movement of the upper-surface-measuring sensor head 601 in the X direction in FIG. 7 by the upper-surface-side movable unit 604, the movement of the lower-surface-measuring sensor head 602 in the X direction in FIG. 7 by the lower-surface-side movable unit 605, and the movement of the calibration steel plate 607 in the Y direction in FIG. 7. As a result, demagnetization of a sensitivity calibration site 610 and an artificial hardened portion (artificial hard spot) 611 (see FIG. 9), which will be described later, provided on the calibration steel plate 607 and measurement of surface layer hardness become possible.

It is difficult to prepare a plate having a uniform structure in a wide range, as the calibration steel plate 607. Therefore, in the present embodiment, as illustrated in FIG. 9, when the upper-surface-measuring sensor head 601 and the lower-surface-measuring sensor head 602 move in the X direction in FIG. 7, a test piece having a uniform structure having a size of about 100 [mm] × 100 [mm] is embedded in a portion of the calibration steel plate 607 through which each hardness sensor 608 surely passes, whereby the sensitivity calibration site 610 having a uniform structure is provided in the calibration steel plate 607. Then, the surface layer hardness of the sensitivity calibration site 610 is measured by each of the hardness sensors 608 of the upper-surface-measuring sensor head 601 and the lower-surface-measuring sensor head 602, and the sensitivity calibration for each of the hardness sensors 608 is performed based on the measurement result. As a result, since the sensitivity calibration is performed in the sensitivity calibration site 610 having a uniform structure in any of the hardness sensors 608, it is possible to realize more accurate sensitivity calibration.

In addition, as illustrated in FIG. 9, the artificial hardened portion 611 is provided on the upper surface and the lower surface of calibration steel plate 607. The artificial hardened portion 611 has a structure having hardness corresponding to the threshold value of the surface layer hardness set in advance for the surface layer of the steel plate S2, and is artificially formed by, for example, a so-called arc strike in which an arc is instantaneously blown onto a base material and immediately cut. Then, after the sensitivity calibration of each of the hardness sensors 608 is performed, the calibration steel plate 607 is moved in the Y direction in FIG. 7, the surface layer hardness of the artificial hardened portion 611 is measured by the upper-surface-measuring sensor head 601 and the lower-surface-measuring sensor head 602, and the threshold value is set for each hardness sensor 608 based on the measurement result. As a result, using the upper-surface-measuring sensor head 601 and the lower-surface-measuring sensor head 602 after performing the sensitivity calibration of each of the hardness sensors 608, it is possible to accurately determine whether or not there is a hardened portion in a region where the surface layer hardness of the upper surface and the lower surface of the steel plate S2 is measured, on the basis of the threshold value.

In the present embodiment, the automatic surface layer hardness measurement device 600 has been described as a steel plate use, but the present surface layer hardness measurement device is not limited to the steel plate use. That is, any material can be used as long as demagnetization and measurement of electromagnetic characteristic values can be performed.

In the present embodiment, it is described that the surface layer hardness of the upper surface and the lower surface of the steel plate S2 is measured, but the surface layer of only the upper surface or the surface layer of only the lower surface may be demagnetized. The demagnetization range may be appropriately selected according to the kind of the steel plate S2, the state of the steel plate S2, or the measurement region of the surface layer hardness of the steel plate S2.

Next, the hardened portion removing step 7 will be described. The hardened portion removing step 7 is a step sent when it is determined that there is a hardened portion by the first surface layer hardness measurement step 6, and for example, the hardened portion is ground and removed from the steel plate S2 by a known grinding unit such as a grinder.

Here, it is desirable that the portion of the steel plate S2 ground in the hardened portion removing step 7 is subjected to measurement of the wall thickness of the steel plate S2 at the grinding position using an ultrasonic thickness meter to confirm whether the thickness falls within a dimensional tolerance set in advance at the time of manufacturing the steel plate. Furthermore, a normal ultrasonic thickness meter uses a single probe that transmits and receives an ultrasonic wave with one transducer, or a binary probe that separately performs transmission and reception of an ultrasonic wave, but since it is necessary to evaluate the entire ground surface, it is desirable to efficiently measure the thickness of the ground surface by utilizing a phased array.

Next, the second surface layer hardness measurement step 8 will be described. The second surface layer hardness measurement step 8 is configured with a step of measuring an electromagnetic characteristic value (change in coercive force or magnetic permeability, or the like) in a range of 0.1 [mm] to 1 [mm] below the surface layer for a portion ground in the hardened portion removing step 7 of the steel plate S2 by the second hardness measurement facility 80, and measuring the hardness of the surface layer based on the measured characteristic value, measuring the surface layer hardness by a hardness meter using a rebound type probe, or measuring the surface layer hardness by a hardness meter using an indentation type probe, and a step of determining whether or not there is a hardened portion harder than the surface layer hardness set in advance by the measurement. In a case where there is a hardened portion and it is determined to be not suitable in the determination, a steel plate is sent to the hardened portion removing step 7 again, and in a case where there is no hardened portion and it is determined to be suitable, the manufacturing of the steel plate S3 is completed and the steel plate S3 is sent to a post-process (steel pipe manufacturing step or the like).

In the present embodiment, the hardened portion removing step 7 has been described as a step of removing the hardened portion of the steel plate S2 determined in the first surface layer hardness measurement step 6 and the second surface layer hardness measurement step 8, but the present invention is not limited thereto. As long as a method can remove the hardened portion without changing the structure, the hardened portion of the steel plate S2 can be removed by a step using a known method other than grinding.

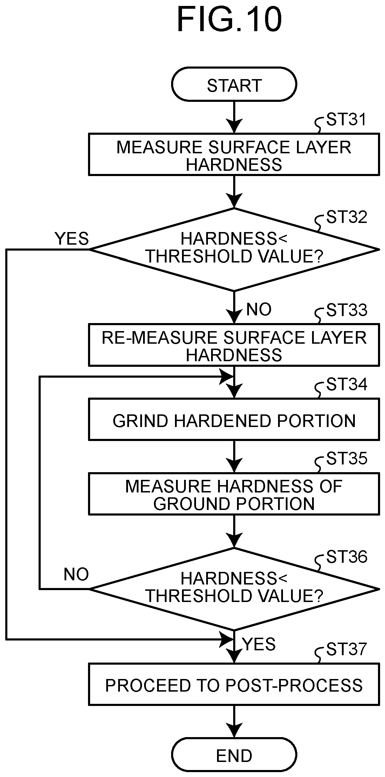

FIG. 10 is a flowchart illustrating an example of control performed in the first surface layer hardness measurement step 6, the hardened portion removing step 7, and the second surface layer hardness measurement step 8.

First, in the first surface layer hardness measurement step 6, the first hardness measurement facility 60 measures the surface layer hardness of the steel plate S2 (Step ST31). Next, the first hardness measurement facility 60 determines whether or not the measured surface layer hardness of the steel plate S2 is smaller than a threshold value set in advance (Step ST32). In the first hardness measurement facility 60, in a case of determining that the measured surface layer hardness of the steel plate S2 is smaller than the threshold value set in advance (Yes in Step ST32), a process proceeds to the post-process PE2 (Step ST37) and a series of control ends.

On the other hand, in a case of determining that the measured surface layer hardness of the steel plate S2 is not smaller than the threshold value set in advance (No in Step ST32), the first hardness measurement facility 60 re-measures the surface layer hardness of the steel plate S2 (Step ST33). Next, in the hardened portion removing step 7, the hardened portion removing facility 70 grinds the hardened portion of the steel plate S2 (Step ST34). Next, in the second surface layer hardness measurement step 8, the second hardness measurement facility 80 measures the hardness of the ground portion of the steel plate S2 (Step ST35). Next, the second hardness measurement facility 80 determines whether or not the measured hardness of the ground portion of the steel plate S2 is smaller than a threshold value set in advance (Step ST36). In the second hardness measurement facility 80, in a case of determining that the measured hardness of the ground portion of the steel plate S2 is not smaller than the threshold value set in advance (No in Step ST36), the process proceeds to Step ST34. On the other hand, in the second hardness measurement facility 80, in a case of determining that the measured hardness of the ground portion of the steel plate S2 is smaller than the threshold value set in advance (Yes in Step ST36), a process proceeds to the post-process (Step ST37) and a series of control ends.

In the method for manufacturing a steel plate according to an embodiment, the steel plate S3 having no hardened portion can be manufactured finally, through the temperature measurement step 3 and the first surface layer hardness measurement step 6, and as necessary, the hardened portion removing step 7 and the second surface layer hardness measurement step 8.

In addition, in the method for manufacturing a steel plate according to an embodiment, since the electromagnetic characteristic value is measured after demagnetization of the surface layer of the upper surface and/or the lower surface of the steel plate S2 during manufacturing of the steel plate S3 before being processed into a steel pipe, it is possible to continuously measure the surface layer hardness of the upper surface and/or the lower surface of the steel plate S2 in a non-contact manner, and as a result, it is possible to suppress overlooking of the hardened portion which has been a problem in the conventional sampling inspection. Furthermore, by removing the hardened portion, which is the hardened portion, from the steel plate S2, it is possible to finally manufacture the steel plate S3 with the specified surface layer hardness without the hardened portion.

Furthermore, in a case where a steel pipe or the like is manufactured using the steel plate S3 without such a hardened portion, it can be expected that the occurrence of corrosion cracking caused by the hardened portion present in the surface layer of the manufactured steel workpiece (steel pipe or the like) is suppressed. In particular, in a case where a steel pipe manufactured using the steel plate S3 manufactured by the method for manufacturing a steel plate according to an embodiment is applied to a pipeline, it can be expected that the effect of suppressing the occurrence of corrosion cracking attributable to the hardened portion on the inner surface of the steel pipe can be more greatly obtained.

Furthermore, according to the automatic surface layer hardness measurement device 600 described in the present embodiment, since the surface layer hardness can be measured after demagnetization of the surface layer of the upper surface and/or the lower surface of the steel plate S2 with a simple device configuration, it is possible to detect the hardened portion on the upper surface and/or the lower surface of the steel plate S2 without deteriorating productivity.

### Industrial Applicability

As described above, in the present invention, it is possible to provide a method for manufacturing a steel plate and a facility line for manufacturing a steel plate which are capable of manufacturing a steel plate in which surface layer hardness is defined.

### Reference Signs List

- 1: ROUGH ROLLING STEP
- 2: FINISH ROLLING STEP
- 3: TEMPERATURE MEASUREMENT STEP
- 4: ACCELERATED COOLING STEP
- 5: CUTTING STEP
- 6: FIRST SURFACE LAYER HARDNESS MEASUREMENT STEP
- 7: HARDENED PORTION REMOVING STEP
- 8: SECOND SURFACE LAYER HARDNESS MEASUREMENT STEP
- 30: TEMPERATURE MEASUREMENT FACILITY
- 31: TEMPERATURE EVALUATION UNIT
- 32: TEMPERATURE MEASUREMENT RESULT OUTPUT UNIT
- 40: ACCELERATED COOLING FACILITY
- 50: PLATE CUTTING FACILITY
- 51: BLANKING CALCULATION UNIT
- 52: STEEL PLATE CARRYING-OUT FACILITY
- 60: FIRST HARDNESS MEASUREMENT FACILITY
- 61: FIRST INSPECTION RESULT OUTPUT UNIT
- 70: HARDENED PORTION REMOVING FACILITY
- 80: SECOND HARDNESS MEASUREMENT FACILITY
- 81: SECOND INSPECTION RESULT OUTPUT UNIT
- 100: CONVEYANCE TABLE ROLL
- 301: UPPER-SURFACE-MEASURING RADIATION THERMOMETER
- 302: LOWER-SURFACE-MEASURING RADIATION THERMOMETER
- 600: AUTOMATIC SURFACE LAYER HARDNESS MEASUREMENT DEVICE
- 601: UPPER-SURFACE-MEASURING SENSOR HEAD
- 602: LOWER-SURFACE-MEASURING SENSOR HEAD
- 603: SURFACE LAYER HARDNESS MEASUREMENT AREA
- 603a: OPENING
- 604: UPPER-SURFACE-SIDE MOVABLE UNIT
- 605: LOWER-SURFACE-SIDE MOVABLE UNIT
- 606: SENSITIVITY CALIBRATION AREA
- 607: CALIBRATION STEEL PLATE
- 608: HARDNESS SENSOR
- 609: HARDNESS SENSOR CONTROL UNIT
- 610: SENSITIVITY CALIBRATION SITE
- 611: ARTIFICIAL HARDENED PORTION
- PE1: PRE-PROCESS FACILITY
- PE2: POST-PROCESS FACILITY
- 51: STEEL PIECE
- S2: STEEL PLATE
- S3: STEEL PLATE

## Claims

1. A method for manufacturing a steel plate, the method comprising:
a temperature measurement step of measuring a surface temperature in an entire width and an entire length of at least one of an upper surface and a lower surface of a steel plate;
an accelerated cooling step of cooling the steel plate while conveying the steel plate;
a cutting step of cutting the steel plate into a number of plates such that the number of plates corresponds to a measurement result of the surface temperature measured in the temperature measurement step; and
a surface layer hardness measurement step of measuring surface layer hardness in the entire width and the entire length of at least one of the upper surface and the lower surface of the steel plate.

2. The method for manufacturing a steel plate according to claim 1, comprising a hardened portion removing step of removing a hardened portion, which is harder than hardness set in advance, in a surface layer of the steel plate based on a measurement result of the surface layer hardness measured in the surface layer hardness measurement step.

3. The method for manufacturing a steel plate according to claim 1, wherein, in the temperature measurement step, a temperature distribution of the surface temperature is divided into N evaluation ranges set in advance in a longitudinal direction of the steel plate, and an evaluation index of temperature is calculated for each of the divided evaluation ranges.

4. The method for manufacturing a steel plate according to claim 2, wherein, in the temperature measurement step, a temperature distribution of the surface temperature is divided into N evaluation ranges set in advance in a longitudinal direction of the steel plate, and an evaluation index of temperature is calculated for each of the divided evaluation ranges.

5. The method for manufacturing a steel plate according to claim 3, wherein, in the cutting step, the steel plate is cut into an initially set number of plates in a case where all the evaluation ranges are determined to be passed, based on the evaluation index for each of the evaluation ranges.

6. The method for manufacturing a steel plate according to claim 4, wherein, in the cutting step, the steel plate is cut into an initially set number of plates in a case where all the evaluation ranges are determined to be passed, based on the evaluation index for each of the evaluation ranges.

7. The method for manufacturing a steel plate according to claim 3, wherein, in the cutting step, in a case where it is determined, based on the evaluation index for each of the evaluation ranges, that there is a failure in even one place in the N-divided evaluation ranges, a number of plates that can be acquired from the steel plate is calculated, and in a case where it is determined that one or more plates can be acquired from the steel plate, the steel plate is cut based on the calculated number of plates and the passed evaluation range.

8. The method for manufacturing a steel plate according to claim 4, wherein, in the cutting step, in a case where it is determined, based on the evaluation index for each of the evaluation ranges, that there is a failure in even one place in the N-divided evaluation ranges, a number of plates that can be acquired from the steel plate is calculated, and in a case where it is determined that one or more plates can be acquired from the steel plate, the steel plate is cut based on the calculated number of plates and the passed evaluation range.

9. The method for manufacturing a steel plate according to claim 3, wherein, in the cutting step, in a case where it is determined, based on the evaluation index for each of the evaluation ranges, that there is a failure in even one place in the N-divided evaluation ranges, a number of plates that can be acquired from the steel plate is calculated, and in a case where it is determined that not even one plate can be acquired from the steel plate, the steel plate is not cut.

10. The method for manufacturing a steel plate according to claim 4, wherein, in the cutting step, in a case where it is determined, based on the evaluation index for each of the evaluation ranges, that there is a failure in even one place in the N-divided evaluation ranges, a number of plates that can be acquired from the steel plate is calculated, and in a case where it is determined that not even one plate can be acquired from the steel plate, the steel plate is not cut.

11. The method for manufacturing a steel plate according to claim 2, 4, 6, 8, or 10, wherein the surface layer hardness measurement step includes
a first surface layer hardness measurement step of measuring the surface layer hardness by utilizing a fact that an electromagnetic feature quantity of a surface layer of the steel plate changes according to the surface layer hardness, and
a second surface layer hardness measurement step of measuring the surface layer hardness of a portion of the steel plate from which a hardened portion has been removed in the hardened portion removing step, by utilizing a fact that an electromagnetic feature quantity of a surface layer of the steel plate changes according to the surface layer hardness or by using a Leeb hardness evaluation method.

12. A facility line for manufacturing a steel plate, the facility line comprising:
a temperature measurement facility configured to measure a surface temperature in an entire width and an entire length of at least one of an upper surface and a lower surface of a steel plate;
an accelerated cooling facility configured to cool the steel plate while conveying the steel plate after heating the steel plate;
a cutting facility configured to cut into a number of plates such that the number of plates corresponds to a measurement result of the surface temperature measured with the temperature measurement facility; and
a surface layer hardness measurement facility configured to measure surface layer hardness in the entire width and the entire length of at least one of the upper surface and the lower surface of the steel plate.

13. The facility line for manufacturing a steel plate according to claim 12, comprising a hardened portion removing facility configured to remove a hardened portion, which is harder than hardness set in advance, in a surface layer of the steel plate based on a measurement result of the surface layer hardness measured with the surface layer hardness measurement facility.
